# EUROPEAN PATENT APPLICATION

(11) **EP 1 719 430 A1**
(43) Date of publication of application: **08.11.2006**
(21) Application number: 05103613.5
(22) Date of filing: 02.05.2005
(51) Int. Cl.: A45C 3/04

(54) **Shopping bag**

(71) Applicant: Majrani Europe S.r.l., 20068 Peschiera Borromeo (Milan) (IT)
(72) Inventor: MAJRANI, Riccardo, 20141, MILAN (IT)
(74) Representative: Coppo, Alessandro

(57) **Abstract**

The present invention relates to a shopping bag (1) of the type having a flat base (2), side walls (3), arranged according to the perimeter of the base (2) and handles (4), positioned in correspondence with the upper end of at least two opposite side walls (3). The shopping bag is also equipped with moving means (5), which comprise wheels (6) connected to the base (2), suitable for allowing it to run or slide on the floor.

## Description

The present invention relates to a shopping bag and in particular to a shopping bag of the type commonly called "shopper".

"Shoppers" generally have a flat base, normally rectangular, and four side walls which extend starting from said base and are arranged along its perimeter.

The dimensions of the base and the height of the side walls create the capacity of the "shopper".

The handles of the bag are produced, in various known ways, in correspondence with the upper end of two opposite side walls, normally those having a larger dimension.

The "shoppers" are also generally made of paper, for the good mechanical characteristics offered.

Although the use of these bags is widely spread, also thanks to the aesthetic quality offered, in no way comparable to that of known plastic envelopes or bags, has the drawback, which is common to all bags, of loading the weight of the contents on the user's arms.

An objective of the present invention is therefore to solve the problems of the known art by providing a shopping bag which reduces the load on the user's arms and which is at the same time easy and economical to produce.

Another objective of the present invention is to provide a shopping bag which reduces the weight on the user's arms and is at the same time biodegradable.

These and other objectives are achieved by the present invention which have all the characteristics of the enclosed claim 1.

Further characteristics of the present invention are specified in the subsequent claims.

Substantially, a shopping bag according to the present invention is of the type equipped with a flat base, side walls arranged according to the perimeter of the base, and handles, positioned at the upper end of at least two opposite side walls, and is characterized in that it comprises moving means for allowing the bag to slide along the floor.

According to a preferential aspect of the present invention, the moving means comprise at least two wheels connected to the base.

According to an advantageous aspect of the present invention, the bag comprises a supporting structure for the wheels to which the base of the bag is hooked.

The bag according to the present invention is advantageously made of a biodegradable material.

The characteristics and advantages of the shopping bag according to the present invention will appear more evident from the following illustrative and nonlimiting description, referring to the enclosed schematic drawings in which:
- figure 1 is a schematic perspective view of the shopping bag according to the present invention;
- figure 2 is an exploded schematic view of the shopping bag according to the present invention shown in figure 1; and
- figure 3 is a schematic view of the shopping bag of figure 1 partially folded.

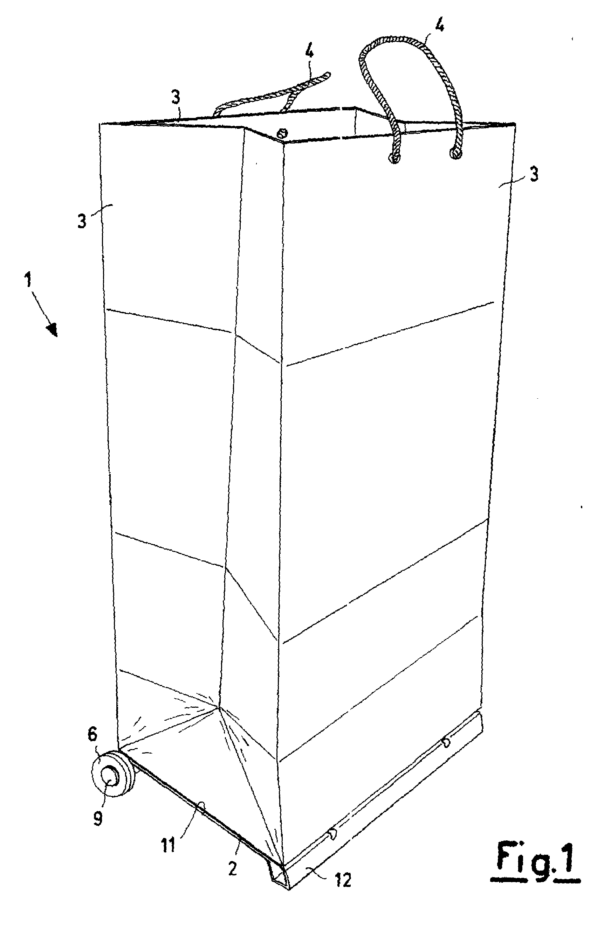

With reference to the figures, these illustrate a shopping bag 1 of the type equipped with a flat base 2, side walls 3, arranged according to the perimeter of the base 2, and two handles 4. The handles 4 are produced, in a known way, as illustrated in figure 1, with two sections of rope engaged in specific holes situated in correspondence with the upper end of two side walls 3. In detail, the handles 4 are arranged in correspondence with the upper end of two opposite side walls 3 with respect to the base 2.

Advantageously according to the present invention, the bag 1 has moving means 5 suitable for allowing the bag to run or slide along the floor, thus significantly reducing the load of the contents on the user's arms.

The moving means 5 are represented by two wheels 6 integral with the base 2 of the bag 1 by means of a supporting structure 8.

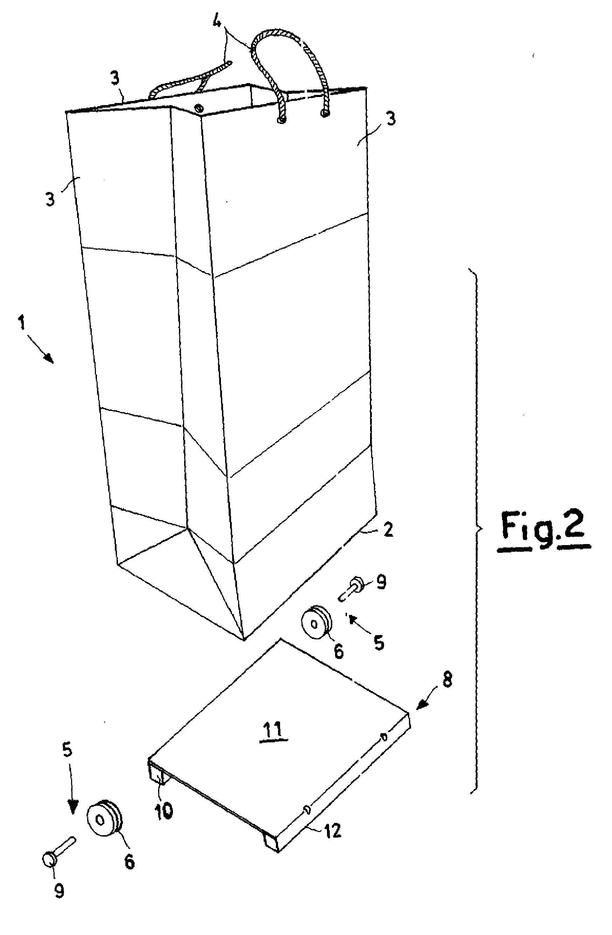

As better illustrated in figure 2, the supporting structure has a flat supporting base 11, having a dimension corresponding to the base 2 of the bag 1, two housing seats 10, for the pins 9, and a prop 12.

The pin 9 blocks the wheel 6 in the specific housing 10, rotationally constraining it to the supporting structure 11 and at the same time defining the rotation axis of the wheel 6.

The prop 12 positioned at the front of the base 11 has a thickness suitable for balancing the height of the wheel 6 thus allowing the supporting base 11 to rest substantially parallel to the ground.

The supporting base 11, the prop 12 and the housing 10 are made in a single piece.

In particular, the above elements 10, 11, 12 are produced by the folding and gluing of a specific punched cardboard, not directly shown.

The wheels 6, also made of cardboard, are, in detail, produced by the joining of two cardboard disks between which an o-ring is inserted. As mentioned above, the wheels 6 are fixed to the supporting structure 8 by means of a plastic pin 9.

The shopping bag 1 according to the present invention is therefore substantially made, i.e. with the supporting structure and wheels 6, of cardboard.

The shopping bag according to the present invention is therefore made for at least 90% of biodegradable material, thus solving the problems of environmental impact of traditional plastic envelopes.

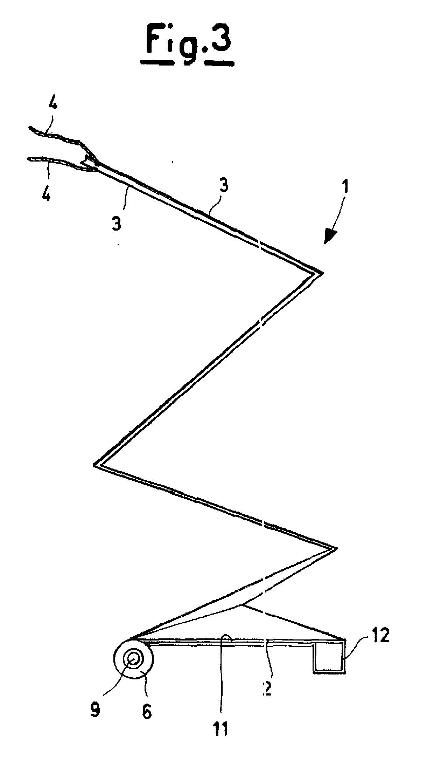

Figure 3 illustrates the shopping bag 1 according to the present invention in the folding phase.

As it is almost totally made of cardboard, the bag 1 can be folded up, thus reducing it to a dimension corresponding to that of the supporting base 11.

The shopping bag 1 of the present invention, thus conceived, can undergo numerous modifications and variants, all included in the same inventive concept.

For example, although in the preferential embodiment of figures 1-3, the shopping bag 1 is almost totally made of a biodegradable and recyclable material, such as cardboard, it is possible however to produce it in a different material, i.e. a long-lasting material, recyclable or not, without being excluded from the protection scope of the present invention.

Furthermore, in practice, the materials used as also the dimensions and components, can vary according to technical demands.

## Claims

1. A shopping bag (1) of the type having a flat base (2), side walls (3), arranged according to the perimeter of the base (2) and handles (4), positioned in correspondence with the upper end of at least two opposite side walls (3), **characterized in that** it comprises moving means (5) for allowing said bag to slide along the floor.

2. The shopping bag (1) according to claim 1, **characterized in that** said moving means (5) comprise wheels (6) connected to said base (2).

3. The shopping bag (1) according to claim 2, **characterized in that** it comprises a supporting structure (8) for said wheels (6) to which said base (2) of the bag is hooked.

4. The bag (1) according to any of the previous claims, **characterized in that** it is made of a biodegradable and/or recyclable material.

5. The bag (1) according to any of the previous claims, **characterized in that** it is made of cardboard.
